# EUROPEAN PATENT SPECIFICATION

(11) **EP 3 745 791 B1**
(45) Date of publication and mention of the grant of the patent: **23.03.2022**
(21) Application number: 18905707.8
(22) Date of filing: 09.02.2018
(51) Int. Cl.: H04W 72/04, H04W 52/02

(54) **METHOD AND DEVICE FOR DISCONTINUOUS RECEPTION**
VERFAHREN UND VORRICHTUNG FÜR DISKONTINUIERLICHEN EMPFANG
PROCÉDÉ ET DISPOSITIF POUR RÉCEPTION DISCONTINUE

(43) Date of publication of application: 02.12.2020
(73) Proprietor: SHENZHEN HEYTAP TECHNOLOGY CORP., LTD., Shenzhen, Guangdong 518057 (CN)
(72) Inventor: SHI, Cong, Dongguan, Guangdong 523860 (CN); YOU, Xin, Dongguan, Guangdong 523860 (CN)
(74) Representative: Rossi, Ugo
(86) International application number: PCT/CN2018/076036
(87) International publication number: WO 2019/153262

(56) References cited:
- WO-A1-2008/111683
- CN-A- 101 583 178
- CN-A- 103 391 600
- JP-A- 2015 073 307
- US-A1- 2016 366 722
- US-B2- 8 902 781
- YU GWO-JONG: "A fuzzy adaptive DRX power saving mechanism for LTE-Advanced networks", 2013 FOURTH INTERNATIONAL CONFERENCE ON THE NETWORK OF THE FUTURE (NOF), IEEE, 23 October 2013 (2013-10-23), pages 1-5, XP032558789, DOI: 10.1109/NOF.2013.6724503 [retrieved on 2014-01-24]
- LEI ZHOU ET AL: "Performance Analysis of Power Saving Mechanism with Adjustable DRX Cycles in 3GPP LTE", 2013 IEEE 78TH VEHICULAR TECHNOLOGY CONFERENCE (VTC FALL), 1 September 2008 (2008-09-01), pages 1-5, XP055252751, ISSN: 1090-3038, DOI: 10.1109/VETECF.2008.312

## Description

### Technical Field

Implementations of the present disclosure relate to the field of communication, and more particularly, to a method and device for Discontinuous Reception (DRX).

### Background

A DRX mechanism is introduced for power saving of a terminal device. A network device may configure the terminal device to "wake up" at a time known in advance by the network device and to monitor a downlink control channel when the terminal device wakes up, or may configure the terminal device to "sleep" at a time known in advance by the network device and not to monitor the downlink control channel when the terminal device is sleeping. In this way, if the network device has data to transmit to the terminal device, the terminal device may be scheduled during a wake-up time of the terminal device, and the terminal device may reduce power consumption during a sleep time.

In a 5G system, transmission parameters of a terminal device may be flexibly changed, which may affect the monitoring of a control channel by the terminal device. Therefore, in the 5G system, how to ensure the terminal device to effectively monitor a downlink control channel becomes an urgent problem to be solved.

Related technologies are known from US 8902781B2 (Xu Haisheng [CN]; ZTE CORP [CN]) 2 December 2014; Yu Gwo-Jong: "A fuzzy adaptive DRX power saving mechanism for LTE-Advanced networks", 2013 Fourth International Conference on the Network of the Future (NOF), IEEE, 23 October 2013, pages 1-5; Lei Zhou et al "Performance Analysis of Power Saving Mechanism with Adjustable DRX Cycles in 3GPP LTE", 2013 IEEE 78th Vehicular Technology Conference (VTC Fall), 1 September 2008, pages 1-5; WO 2008/111683 A1 (Sharp KK [JP]; Xu ShuGong [CN]) 18 September 2008.

### Summary

Embodiments of the present disclosure provide a method and device for discontinuous reception as defined in the attached independent claims, which can ensure that a terminal device monitors a downlink control channel effectively. Further improvements and embodiments are provided in the dependent claims.

### Brief Description of Drawings

FIG. 1 is a schematic diagram of a wireless communication system according to an implementation of the present disclosure.
FIG. 2 is a schematic diagram of a DRX cycle.
FIG. 3 is a schematic diagram of an influence on monitoring a control channel due to change of a transmission parameter.
FIG. 4 is a schematic flow chart of a method for discontinuous reception according to an implementation of the present disclosure.
FIG. 5 is a schematic block diagram of a terminal device according to an implementation of the present disclosure.
FIG. 6 is a schematic diagram of structure of a terminal device according to an implementation of the present disclosure.
FIG. 7 is a schematic diagram of structure of a system chip according to an implementation of the present disclosure.

### Detailed Description

Technical solutions of implementations of the present disclosure may be applied to various communication systems, such as, a Global System of Mobile communication (GSM) system, a Code Division Multiple Access (CDMA) system, a Wideband Code Division Multiple Access (WCDMA) system, a General Packet wireless Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, or a future 5G system.

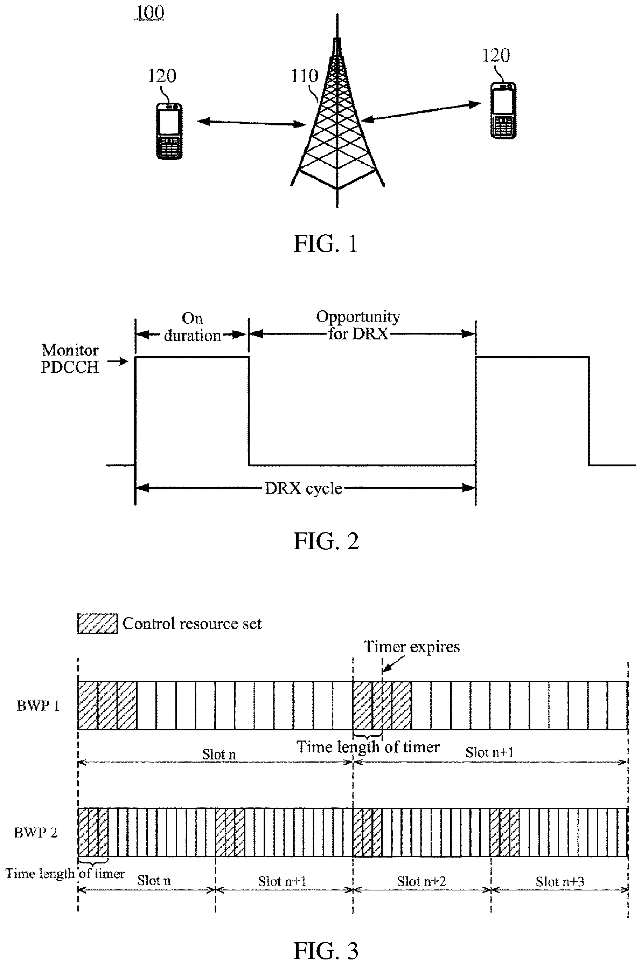

FIG. 1 shows a wireless communication system 100 to which an implementation of the present disclosure is applied. The wireless communication system 100 may include a network device 110. The network device 100 may be a device that communicates with a terminal device. The network device 100 may provide a communication coverage for a specific geographical area, and may communicate with terminal devices (e.g., UE) located within the coverage area. Optionally, the network device 100 may be a Base Transceiver Station (BTS) in a GSM system or CDMA system, a NodeB (NB) in a WCDMA system, an Evolutional Node B (eNB or eNodeB) in an LTE system, or a radio controller in a Cloud Radio Access Network (CRAN). Or the network device may be a relay station, an access point, an on-board device, or a wearable device, a network side device in a future 5G network, or a network device in a future evolved Public Land Mobile Network (PLMN), etc.

The wireless communication system 100 also includes at least one terminal device 120 located within the coverage area of the network device 110. The terminal device 120 may be mobile or fixed. Optionally, the terminal device 120 may be referred to an access terminal, a user equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, an on-board device, a wearable device, a terminal device in a future 5G network, or a terminal device in a future evolved Public Land Mobile Network (PLMN), or the like.

Optionally, Device to Device (D2D) communication may be performed between the terminal devices 120.

Optionally, the 5G system or network may also be referred to as a New Radio (NR) system or network.

FIG. 1 exemplifies one network device and two terminal devices. Optionally, the wireless communication system 100 may include multiple network devices, and another quantity of terminal devices may be included within the coverage area of each network device, and this is not restricted in implementations of the present disclosure.

Optionally, the wireless communication system 100 may further include other network entities such as a network controller and a mobile management entity, and this is not restricted in implementations of the present disclosure.

In a LTE system, a Media Access Control (MAC) entity is configured with a DRX function by Radio Resource Control (RRC) to control a behavior of monitoring a Physical Downlink Control Channel (PDCCH) of a terminal device. For example, as shown in FIG. 2, in an RRC CONNECTED mode, if the terminal device is configured with the DRX function, the MAC entity may continuously monitor the PDCCH during an On Duration and not monitor the PDCCH during an Opportunity for DRX, thereby reducing power consumption of the terminal device. The network device may configure a set of DRX parameters for the MAC entity through RRC signaling, for example, configure a series of DRX timers, to manage wake-up and sleep states of the terminal device. According to values of these parameters, a DRX cycle as shown in FIG. 2 may be obtained.

In a 5G system, a transmission parameter of a terminal device, for example, a numerology, may be flexibly changed, which may affect the monitoring of a control channel by the terminal device.

For example, as shown in FIG. 3, assuming that a network device configures a DRX on duration timer (drx-onDurationTimer) for the terminal device, and duration of the timer is equal to a Control Resource Set (CORESET) of Bandwidth Part (BWP) 2. Numerologies, for example, subcarrier spacings, adopted on BWP 1 and BWP 2 in FIG. 3 are different. For example, a subcarrier spacing adopted on BWP 1 may be 15 kHz, and a subcarrier spacing adopted on BWP 2 may be 30 kHz. When the terminal device switches from BWP 2 to BWP 1, as the timer will expire within a time length of a Control Resource Set of BWP 1, the terminal device cannot monitor Physical Downlink Control Channel (PDCCH) resources on the Control Resource Set of BWP 1.

In an implementation of the present disclosure, when a transmission parameter is changed, the terminal device can dynamically adjust a DRX parameter, and monitor a PDCCH using the adjusted DRX parameter, thus ensuring that the terminal device may effectively monitor the downlink control channel when the transmission parameter is changed.

It should be understood that the monitoring in the implementation of the present disclosure may also be referred to as listening, sensing, detecting, checking, etc.

It should further be understood that the numerology in the implementation of the present disclosure includes a subcarrier spacing.

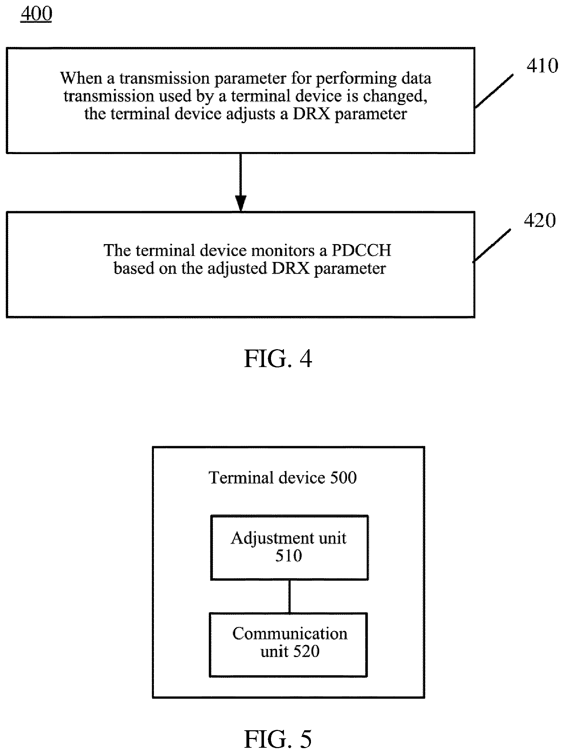

FIG. 4 is a schematic flow chart of a method for discontinuous reception according to an implementation of the present disclosure. A terminal device shown in FIG. 4 may be, for example, the terminal device 120 shown in FIG. 1. As shown in FIG. 4, the method for the discontinuous reception includes acts 410 and 420.

In 410, when a transmission parameter for performing data transmission used by a terminal device is changed, the terminal device adjusts a DRX parameter.

In 420, the terminal device monitors a PDCCH based on the adjusted DRX parameter. Specifically, when the transmission parameter, such as a BWP or a numerology, used by the terminal device for performing the data transmission is changed, the terminal device adjusts a currently used DRX parameter and continue to perform the data transmission, such as monitoring the PDCCH, based on the adjusted DRX parameter.

Therefore, when the transmission parameter is changed, the terminal device dynamically adjusts the DRX parameter and monitors the PDCCH using the adjusted DRX parameter, thus ensuring that the terminal device effectively monitors the downlink control channel when the transmission parameter is changed.

Herein, the DRX parameter is a DRX slot offset (drx-SlotOffset) and/or a DRX on duration timer (drx-onDurationTimer).

In act 410, the change of the transmission parameter of the terminal device may be that a BWP used by the terminal device is changed and/or a numerology used by the terminal device is changed. That is, the transmission parameter includes the BWP and/or the numerology.

Herein, optionally, multiple BWPs that can be used for data transmission by the terminal device may correspond to multiple numerologies, and whichever BWP is used by the terminal device to transmit data, the terminal device may use a numerology corresponding to the BWP to transmit the data. Herein, each BWP corresponds to one numerology, and each numerology may correspond to at least one BWP. Therefore, when the BWP is changed, the numerology used by the terminal device may be changed, or may not be changed. However, when the numerology used by the terminal device is changed, it indicates that the BWP used by the terminal device is changed. Two cases are described separately below.

First, a first case is explained. That the transmission parameter is changed includes a transmission bandwidth part (BWP) is changed. In this case, the terminal device may adjust the DRX parameter through the following three modes.

### Mode 1

The terminal device adjusts the DRX parameter to a DRX parameter corresponding to a first numerology according to a mapping relationship between multiple numerologies and multiple DRX parameters. Herein, the first numerology is a numerology adopted on the changed BWP.

The numerology includes a subcarrier spacing, and the DRX parameter includes a DRX on duration timer and a DRX slot offset. Then the mapping relationship between the multiple numerologies and the DRX parameters may be, for example, a mapping relationship as shown in Table 1.

**Table 1**

| Numerology (Subcarrier spacing) | DRX parameter | |
|---|---|---|
| | DRX on duration timer | DRX slot offset |
| 15 kHz | ≥ 1 ms | 0 ms |
| 30 kHz | ≥16-32 ms | {0 ms, 16-32 ms} |
| 60 kHz | ≥8-32 ms | {0 ms, 8-32 ms, 16-32 ms, 24-32 ms} |
| 120 kHz | ≥4-32 ms | {0 ms, 4-32 ms, 8-32 ms, 12-32 ms, 16-32 ms, 20-32 ms, 24-32 ms, 28-32 ms } |
| 240 kHz | ≥2-32 ms | {0 ms, 2-32 ms, 4-32 ms, 6-32 ms, 8-32 ms, 10-32 ms, 12-32 ms, 14-32 ms, 16-32 ms, 18-32 ms, 20-32 ms, 22-32 ms, 24-32 ms, 26-32 ms, 28-32 ms, 30-32 ms } |
| 480 kHz | Values for all configurations | Values for all configurations |

As shown in table 1, if the terminal device switches from BWP 2 to BWP 1 when performing data transmission, wherein a subcarrier spacing adopted on BWP 1 is assumed to be 15kHz and a subcarrier spacing adopted on BWP 2 is assumed to be 30kHz, then the terminal device needs to switch the DRX parameter from a DRX parameter corresponding to the subcarrier spacing of 30 kHz adopted on BWP 1 to a DRX parameter corresponding to the subcarrier spacing of 15kHz adopted on BWP 2. That is, a timing duration of the DRX on duration timer is adjusted from greater than or equal to 16-32 ms to greater than or equal to 1 ms, and the DRX slot offset is adjusted from a range of {0 ms, 16-32 ms} to 0 ms. Thus, the terminal device uses the adjusted DRX parameter to monitor the PDCCH in a CORESET of BWP 1.

Of course, if a numerology adopted on a BWP before switching and a numerology adopted on a BWP after switching are the same, the terminal device may not adjust the DRX parameter.

### Mode 2

The terminal device adjusts the DRX parameter to a DRX parameter corresponding to a second numerology according to a mapping relationship between multiple numerologies and multiple DRX parameters, and the second numerology is a numerology with a minimum subcarrier spacing.

Herein, the minimum subcarrier spacing may be, for example, 15 kHz in Table 1.

The mapping relationship between numerologies and DRX parameter may be as shown in Table 1, for example. When a BWP used by the terminal device for transmitting data is changed, the DRX parameter may be directly adjusted to a DRX parameter corresponding to the minimum subcarrier spacing, that is, the DRX parameter corresponding to 15 kHz, based on the mapping relationship between different numerologies (subcarrier spacings) and different DRX parameters.

### Mode 3

The terminal device adjusts the DRX parameter to a specific DRX parameter, and the specific DRX parameter is per-configured.

The specific DRX parameter may be configured by a network device for the terminal device in advance, or may be agreed in advance between the network device and the terminal device, for example, a DRX parameter specified in a protocol. When a BWP used for transmitting data by the terminal device is changed, a currently used DRX parameter may be directly adjusted to the specific DRX parameter.

The specific DRX parameter may be, for example, the DRX parameter corresponding to the minimum subcarrier spacing in Mode 2 or another default DRX parameter.

A second case is described below. For the second case, that the transmission parameter is changed includes a transmission bandwidth part (BWP) is changed and a numerology is changed. Or in other words, that the transmission parameter is changed includes the numerology is changed, as the change of the numerology indicates that a BWP used by the terminal device is also changed.

In this case, the terminal device may also adjust the DRX parameter through three modes, as described below separately.

### Mode 1

The terminal device adjusts the DRX parameter to a DRX parameter corresponding to the changed numerology according to a mapping relationship between multiple numerologies and multiple DRX parameters.

When a numerology used by the terminal device is changed, the terminal device may adjust the DRX parameter based on a mapping relationship between numerologies and DRX parameters, and the adjusted DRX parameter is a DRX parameter corresponding to the changed numerology.

The mapping relationship between the numerologies and the DRX parameters may be, for example, as shown in Table 1. For example, assuming that the numerology includes a subcarrier spacing, if determining that a subcarrier spacing used by the terminal device is switched from 30 kHz to 15 kHz, the terminal device adjusts the DRX parameter to a DRX parameter corresponding to 15 kHz, that is, adjusts a timing duration of the DRX on duration timer to be greater than or equal to 1 ms and adjusts the DRX slot offset to be 0 ms, and monitors a PDCCH based on the adjusted DRX parameter.

### Mode 2

The terminal device adjusts the DRX parameter to a DRX parameter corresponding to a second numerology according to a mapping relationship between multiple numerologies and multiple DRX parameters, the second numerology is a numerology with a minimum subcarrier spacing.

Herein, the minimum subcarrier spacing may be, for example, 15 kHz in Table 1.

The mapping relationship between the numerologies and the DRX parameter may be as shown in Table 1, for example. When a BWP used by the terminal device for transmitting data is changed, the DRX parameter may be directly adjusted to a DRX parameter corresponding to the minimum subcarrier spacing, i.e., the DRX parameter corresponding to 15 kHz, based on the mapping relationship between different numerologies (subcarrier spacings) and different DRX parameters.

### Mode 3

The terminal device adjusts the DRX parameter to a specific DRX parameter, and the specific DRX parameter is preconfigured.

Herein, a minimum subcarrier spacing may be 15 kHz, for example.

The specific DRX parameter may be configured by a network device for the terminal device in advance, or may be agreed in advance between the network device and the terminal device, for example, a DRX parameter specified in a protocol. When a numerology used by the terminal device for transmitting data, such as a subcarrier spacing, is changed, a currently used DRX parameter may be directly adjusted to the specific DRX parameter.

The specific DRX parameter may be, for example, a DRX parameter corresponding to the minimum subcarrier spacing in Mode 2 or another default DRX parameter.

Optionally, before act 410, that is, before adjusting the DRX parameter, the terminal device needs to acquire a mapping relationship between multiple numerologies and multiple DRX parameters. Specifically, the terminal device may receive configuration information for indicating the mapping relationship sent by the network device, thereby acquiring the mapping relationship based on the configuration information of the network device; or, the mapping relationship may be agreed in advance and pre-stored in the terminal device.

Methods for discontinuous reception according to implementations of the present disclosure have been described in detail above. Apparatuses according to implementations of the present disclosure are described below with reference to FIGs. 5 to 7. Technical features described in the method implementations are applicable to the following implementations of apparatuses.

FIG. 5 is a schematic block diagram of a terminal device 500 according to an implementation of the present disclosure. As shown in FIG. 5, the terminal device 500 includes an adjustment unit 510 and a communication unit 520.

Herein, the adjustment unit 510 is configured to adjust a DRX parameter when a transmission parameter used for performing data transmission is changed.

The communication unit 520 is configured to monitor a PDCCH based on the DRX parameter adjusted by the adjustment unit 510.

Therefore, when a transmission parameter is changed, the terminal device dynamically adjusts a DRX parameter and monitors a PDCCH using the adjusted DRX parameter, thus ensuring that the terminal device effectively monitors the downlink control channel when the transmission parameters is changed.

That the transmission parameter is changed includes a transmission Bandwidth Part (BWP) is changed.

Optionally, the adjusting unit 510 is specifically configured to adjust the DRX parameter to a DRX parameter corresponding to a first numerology according to a mapping relationship between multiple numerologies and multiple DRX parameters, and the first numerology is a numerology adopted on the changed BWP.

Optionally, the adjusting unit 510 is specifically configured to adjust the DRX parameter to a DRX parameter corresponding to a second numerology according to a mapping relationship between multiple numerologies and multiple DRX parameters, and the second numerology is a numerology with a minimum subcarrier spacing.

Optionally, the adjusting unit 510 is specifically configured to adjust the DRX parameter to a specific DRX parameter, and the specific DRX parameter is preconfigured by a network device.

Optionally, that the transmission parameter is changed includes a transmission bandwidth part (BWP) is changed and a numerology is changed.

Optionally, the adjusting unit 510 is specifically configured to adjust the DRX parameter to a DRX parameter corresponding to the changed numerology according to a mapping relationship between multiple numerologies and multiple DRX parameters.

Optionally, the adjusting unit 510 is specifically configured to adjust the DRX parameter to a DRX parameter corresponding to a second numerology according to a mapping relationship between multiple numerologies and multiple DRX parameters, and the second numerology is a numerology with a minimum subcarrier spacing.

Optionally, the adjusting unit 510 is specifically configured to adjust the DRX parameter to a specific DRX parameter, and the specific DRX parameter is preconfigured by a network device.

Optionally, the minimum subcarrier spacing is 15 kHz.

Optionally, the adjustment unit 510 is further configured to receive configuration information sent by the network device through the communication unit 520, and the configuration information is used for indicating the mapping relationship; or, to acquire the mapping relationship pre-stored in the terminal device.

The DRX parameter includes a DRX on duration timer and/or a DRX slot offset.

It should be understood that the terminal device 500 may perform corresponding actions performed by the terminal device in the above-mentioned method 400, which is not described repeatedly herein for brevity.

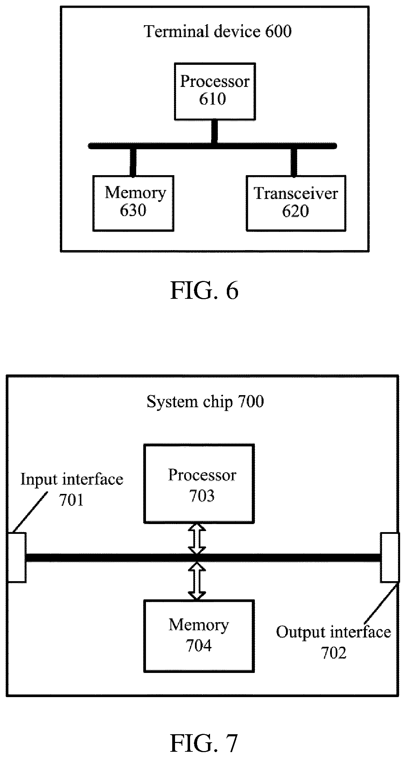

FIG. 6 is a schematic diagram of structure of a terminal device 600 according to an implementation of the present disclosure. As shown in FIG. 6, the terminal device includes a processor 610, a transceiver 620, and a memory 630, wherein the processor 610, the transceiver 620, and the memory 630 communicate with each other through an internal connection path. The memory 630 is used for storing instructions, and the processor 610 is used for executing the instructions stored in the memory 630 to control the transceiver 620 to send or receive signals.

Optionally, the processor 610 may call the program codes stored in the memory 630 to perform corresponding actions performed by the terminal device in the method 400, which is not described repeatedly herein for brevity.

It should be understood that the processor in an implementation of the present disclosure may be an integrated circuit chip with a capability for processing signals. In the implementation process, the acts of the method implementations described above may be accomplished by integrated logic circuits of hardware in the processor or instructions in the form of software. The above processor may be a general purpose processor, a digital signal processor (DSP), an application specific integrated circuit (ASIC), a field programmable gate array (FPGA), or other programmable logic device, discrete gate or transistor logic device, or discrete hardware component. The processor may implement various methods, acts and logic block diagrams disclosed in implementations of the present disclosure. The general purpose processor may be a microprocessor or the processor may be any conventional processor or the like. The acts of the method disclosed in connection with the implementations of the present disclosure may be directly embodied by the execution of the hardware decoding processor, or by the execution of a combination of hardware and software modules in the decoding processor. The software modules may be located in a storage medium commonly used in the art, such as a random access memory, flash memory, read-only memory, programmable read-only memory or electrically erasable programmable memory, or register. The storage medium is located in the memory, and the processor reads the information in the memory and completes the acts of the above method in combination with its hardware.

It should be understood that the memory in implementations of the present disclosure may be a transitory memory or non-transitory memory, or may include both transitory and non-transitory memories. The non-transitory memory may be a read-only memory (ROM), programmable ROM (PROM), an erasable programmable ROM (EPROM), an electrically erasable programmable ROM (EEPROM), or a flash memory. The transitory memory may be a random access memory (RAM) which serves as an external cache. As an example, but not as a limitation, many forms of RAMs are available, such as a static random access memory (SRAM), a dynamic random access memory (DRAM), a synchronous dynamic random access memory (SDRAM), a double data rate SDRAM (DDR SDRAM), an enhanced SDRAM (ESDRAM), a Synchlink DRAM (SLDRAM), and a Direct Rambus RAM (DR RAM). It should be noted that the memories of the systems and methods described in the implementations of the present disclosure are intended to include, but not limited to, these and any other suitable types of memories.

FIG. 7 is a schematic diagram of structure of a system chip according to an implementation of the present disclosure. The system chip 700 of FIG. 7 includes an input interface 701, an output interface 702, at least one processor 703, and a memory 704. The input interface 701, the output interface 702, the processor 703, and the memory 704 are connected to each other through an internal connection path. The processor 703 is used for executing codes in the memory 704.

Optionally, when the code is executed, the processor 703 may perform actions performed by the terminal device in the method 400, which is not described repeatedly herein for brevity.

Those of ordinary skill in the art will recognize that the exemplary elements and algorithm acts described in connection with the implementations disclosed herein can be implemented in electronic hardware, or a combination of computer software and electronic hardware. Whether these functions are performed in hardware or software depends on the specific application and design constraints of the technical solution. Skilled artisans may use different methods to implement the described functions in respect to each particular application, but such implementation should not be considered to be beyond the scope of the present invention.

Those skilled in the art can clearly understand that for convenience and conciseness of description, corresponding processes in the aforementioned method implementations may be referred to for the specific working processes of the system, apparatus, and unit described above, which are not repeated here.

In several implementations provided by the present disclosure, it should be understood that the disclosed system, apparatus and method may be implemented in other ways. For example, the apparatus implementations described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the implementations.

In addition, various functional units in various implementations of the present disclosure may be integrated in one processing unit, or the various units may be physically present separately, or two or more units may be integrated in one unit.

The functions may be stored in a computer readable storage medium if implemented in a form of software functional units and sold or used as a separate product. Based on this understanding, the technical solution of the present disclosure, in essence, or the part contributing to the prior art, or the part of the technical solution, may be embodied in the form of a software product stored in a storage medium, including a number of instructions for causing a computer device (which may be a personal computer, a server, or a network device) to perform all or part of the acts of the method described in various implementations of the present disclosure. The aforementioned storage medium includes various media capable of storing program codes, such as a U disk, a mobile hard disk, a read-only memory (ROM), a random access memory (RAM), a magnetic disk, or an optical disk.

## Claims

1. A method for discontinuous reception, DRX, wherein:
when a transmission parameter for performing data transmission used by a terminal device is changed, adjusting (410), by the terminal device, a DRX parameter;
monitoring (420), by the terminal device, a Physical Downlink Control Channel, PDCCH, based on the adjusted DRX parameter; the method **characterised by**
the transmission parameter comprises a transmission bandwidth part, BWP; or a BWP and a numerology, wherein the numerology comprises a subcarrier spacing; and
the DRX parameter comprises a DRX on duration timer and/or a DRX slot offset.

2. The method of claim 1, wherein that the transmission parameter is changed comprises the BWP is changed.

3. The method of claim 2, wherein adjusting, by the terminal device, the DRX parameter comprises:
adjusting, by the terminal device, the DRX parameter to a DRX parameter corresponding to a first numerology according to a mapping relationship between a plurality of numerologies and a plurality of DRX parameters, wherein the first numerology is a numerology adopted on the changed BWP.

4. The method of claim 2, wherein adjusting, by the terminal device, the DRX parameter comprises:
adjusting, by the terminal device, the DRX parameter to a DRX parameter corresponding to a second numerology according to a mapping relationship between a plurality of numerologies and a plurality of DRX parameters, wherein the second numerology is a numerology with a minimum subcarrier spacing.

5. The method of claim 2, wherein adjusting, by the terminal device, the DRX parameter comprises:
adjusting, by the terminal device, the DRX parameter to a specific DRX parameter, wherein the specific DRX parameter is preconfigured by a network device.

6. The method of claim 1, wherein that the transmission parameter is changed comprises the BWP and the numerology are changed.

7. The method of claim 6, wherein adjusting, by the terminal device, the DRX parameter comprises:
adjusting, by the terminal device, the DRX parameter to a DRX parameter corresponding to the changed numerology according to a mapping relationship between a plurality of numerologies and a plurality of DRX parameters.

8. The method of claim 6, wherein adjusting, by the terminal device, the DRX parameter comprises:
adjusting, by the terminal device, the DRX parameter to a DRX parameter corresponding to a second numerology according to a mapping relationship between a plurality of numerologies and a plurality of DRX parameters, wherein the second numerology is a numerology with a minimum subcarrier spacing.

9. The method of claim 6, wherein adjusting, by the terminal device, the DRX parameter comprises:
adjusting, by the terminal device, the DRX parameter to a specific DRX parameter, wherein the specific DRX parameter is preconfigured by a network device.

10. The method of claim 4 or 8, wherein the minimum subcarrier spacing is 15 kHz.

11. The method of any one of claims 3, 4, 7-10, wherein before adjusting, by the terminal device, the DRX parameter, the method further comprises:
receiving, configuration information sent by a network device, wherein the configuration information is used for indicating a mapping relationship; or,
acquiring, by the terminal device, a mapping relationship pre-stored in the terminal device.

12. A terminal device, comprising:
an adjustment unit (510), configured to adjust a discontinuous reception, DRX, parameter when a transmission parameter used for performing data transmission is changed;
a communication unit (520), configured to monitor a Physical Downlink Control Channel, PDCCH, based on the DRX parameter adjusted by the adjustment unit; the terminal device **characterised by**:
the transmission parameter comprises a transmission bandwidth part, BWP; or a BWP and a numerology, wherein the numerology comprises a subcarrier spacing; and
the DRX parameter comprises a DRX on duration timer and/or a DRX slot offset.

13. The terminal device of claim 12, wherein that the transmission parameter is changed comprises the BWP is changed.

14. The terminal device of claim 12, wherein that the transmission parameter is changed comprises the BWP and the numerology are changed.

## Patentansprüche

1. Verfahren für diskontinuierlichen Empfang, DRX, in dem
dann, wenn sich ein Übertragungsparameter für die Ausführung einer Datenübertragung, der von einer Endgerätvorrichtung verwendet wird, ändert, durch die Endgerätvorrichtung ein DRX-Parameter eingestellt (410) wird;
durch die Endgerätvorrichtung ein physikalischer Abwärtsstreckensteuerkanal, PDCCH, anhand des eingestellten DRX-Parameters überwacht (420) wird;
wobei das Verfahren **dadurch gekennzeichnet ist, dass** der Übertragungsparameter enthält: einen Bandbreitenabschnitt, BWP, der Übertragung; oder einen BWP und eine Numerologie, wobei die Numerologie einen Unterträgerabstand enthält; und
der DRX-Parameter einen DRX-Einschaltdauer-Zeitgeber und/oder einen DRX-Schlitzversatz enthält.

2. Verfahren nach Anspruch 1, wobei das Ändern des Übertragungsparameters das Ändern des BWP umfasst.

3. Verfahren nach Anspruch 2, wobei das Einstellen durch die Endgerätvorrichtung des DRX-Parameters Folgendes umfasst:
Einstellen durch die Endgerätvorrichtung des DRX-Parameters auf einen DRX-Parameter, der einer ersten Numerologie entspricht, in Übereinstimmung mit einer Abbildungsbeziehung zwischen mehreren Numerologien und mehreren DRX-Parametern, wobei die erste Numerologie eine an den geänderten BWP angepasste Numerologie ist.

4. Verfahren nach Anspruch 2, wobei das Einstellen durch die Endgerätvorrichtung des DRX-Parameters Folgendes umfasst:
Einstellen durch die Endgerätvorrichtung des DRX-Parameters auf einen DRX-Parameter, der einer zweiten Numerologie entspricht, in Übereinstimmung mit einer Abbildungsbeziehung zwischen mehreren Numerologien und mehreren DRX-Parametern, wobei die zweite Numerologie eine Numerologie mit einem minimalen Unterträgerabstand ist.

5. Verfahren nach Anspruch 2, wobei das Einstellen durch die Endgerätvorrichtung des DRX-Parameters Folgendes umfasst:
Einstellen durch die Endgerätvorrichtung des DRX-Parameters auf einen spezifischen DRX-Parameter, wobei der spezifische DRX-Parameter im Voraus durch eine Netzvorrichtung konfiguriert wird.

6. Verfahren nach Anspruch 1, wobei das Ändern des Übertragungsparameters das Ändern des BWP und der Numerologie umfasst.

7. Verfahren nach Anspruch 6, wobei das Einstellen durch die Endgerätvorrichtung des DRX-Parameters Folgendes umfasst:
Einstellen durch die Endgerätvorrichtung des DRX-Parameters auf einen DRX-Parameter, der der geänderten Numerologie entspricht, in Übereinstimmung mit einer Abbildungsbeziehung zwischen mehreren Numerologien und mehreren DRX-Parametern.

8. Verfahren nach Anspruch 6, wobei das Einstellen durch die Endgerätvorrichtung des DRX-Parameters Folgendes umfasst:
Einstellen durch die Endgerätvorrichtung des DRX-Parameters auf einen DRX-Parameter, der einer zweiten Numerologie entspricht, in Übereinstimmung mit einer Abbildungsbeziehung zwischen mehreren Numerologien und mehreren DRX-Parametern, wobei die zweite Numerologie eine Numerologie mit einem minimalen Unterträgerabstand ist.

9. Verfahren nach Anspruch 6, wobei das Einstellen durch die Endgerätvorrichtung des DRX-Parameters Folgendes umfasst:
Einstellen durch die Endgerätvorrichtung des DRX-Parameters auf einen spezifischen DRX-Parameter, wobei der spezifische DRX-Parameter im Voraus durch eine Netzvorrichtung konfiguriert wird.

10. Verfahren nach Anspruch 4 oder 8, wobei der minimale Unterträgerabstand 15 kHz beträgt.

11. Verfahren nach einem der Ansprüche 3, 4, 7-10, wobei vor dem Einstellen durch die Endgerätvorrichtung des DRX-Parameters das Verfahren ferner Folgendes umfasst:
Empfangen von Konfigurationsinformationen, die durch eine Netzvorrichtung gesendet werden, wobei die Konfigurationsinformationen verwendet werden, um eine Abbildungsbeziehung anzugeben; oder
Erfassen durch die Endgerätvorrichtung einer Abbildungsbeziehung, die im Voraus in der Endgerätvorrichtung gespeichert worden ist.

12. Endgerätvorrichtung, die Folgendes umfasst:
eine Einstelleinheit (510), die konfiguriert ist, einen Parameter für diskontinuierlichen Empfang, DRX-Parameter, einzustellen, wenn sich ein Übertragungsparameter, der für die Ausführung einer Datenübertragung verwendet wird, geändert hat;
eine Kommunikationseinheit (520), die konfiguriert ist, einen physikalischen Abwärtsstreckensteuerkanal, PDCCH, anhand des durch die Einstelleinheit eingestellten DRX-Parameters zu überwachen; wobei die Endgerätvorrichtung **dadurch gekennzeichnet ist, dass**
der Übertragungsparameter enthält: einen Bandbreitenabschnitt, BWP, der Übertragung; oder einen BWP und eine Numerologie, wobei die Numerologie einen Unterträgerabstand enthält; und
der DRX-Parameter einen DRX-Einschaltdauer-Zeitgeber und/oder einen DRX-Schlitzversatz enthält.

13. Endgerätvorrichtung nach Anspruch 12, wobei das Ändern des Übertragungsparameters das Ändern des BWP umfasst.

14. Endgerätvorrichtung nach Anspruch 12, wobei das Ändern des Übertragungsparameters das Ändern des BWP und der Numerologie umfasst.

## Revendications

1. Procédé de réception discontinue, DRX, avec :
lorsqu'un paramètre de transmission pour effectuer une transmission de données utilisée par un dispositif terminal est modifié, le réglage (410), par le dispositif terminal, d'un paramètre DRX ;
la surveillance (420), par le dispositif terminal, d'un canal de commande de liaison descendante physique, PDCCH, sur la base du paramètre DRX réglé ; le procédé étant **caractérisé par le fait que** le paramètre de transmission comprend une partie de largeur de bande de transmission, BWP ; ou une BWP et une numérotation, la numérotation comprenant un espacement de sous-porteuse ; et
le paramètre DRX comprenant un temporisateur de durée d'activation DRX et/ou un décalage d'intervalle DRX.

2. Procédé selon la revendication 1, le fait que le paramètre de transmission est modifié comprenant le fait que la BWP est modifiée.

3. Procédé selon la revendication 2, le réglage, par le dispositif terminal, du paramètre DRX comprenant :
le réglage, par le dispositif terminal, du paramètre DRX à un paramètre DRX correspondant à une première numérotation en fonction d'une relation de mise en correspondance entre une pluralité de numérotations et une pluralité de paramètres DRX, la première numérotation étant une numérotation adoptée sur la BWP modifiée.

4. Procédé selon la revendication 2, le réglage, par le dispositif terminal, du paramètre DRX comprenant :
le réglage, par le dispositif terminal, du paramètre DRX à un paramètre DRX correspondant à une deuxième numérotation en fonction d'une relation de mise en correspondance entre une pluralité de numérotations et une pluralité de paramètres DRX, la deuxième numérotation étant une numérotation avec un espacement de sous-porteuse minimum.

5. Procédé selon la revendication 2, le réglage, par le dispositif terminal, du paramètre DRX comprenant :
le réglage, par le dispositif terminal, du paramètre DRX à un paramètre DRX spécifique, le paramètre DRX spécifique étant préconfiguré par un dispositif de réseau.

6. Procédé selon la revendication 1, le fait que le paramètre de transmission est modifié comprenant le fait que la BWP et la numérotation sont modifiées.

7. Procédé selon la revendication 6, le réglage, par le dispositif terminal, du paramètre DRX comprenant :
le réglage, par le dispositif terminal, du paramètre DRX à un paramètre DRX correspondant à la numérotation modifiée en fonction d'une relation de mise en correspondance entre une pluralité de numérotations et une pluralité de paramètres DRX.

8. Procédé selon la revendication 6, le réglage, par le dispositif terminal, du paramètre DRX comprenant :
le réglage, par le dispositif terminal, du paramètre DRX à un paramètre DRX correspondant à une seconde numérotation en fonction d'une relation de mise en correspondance entre une pluralité de numérotations et une pluralité de paramètres DRX, la seconde numérotation étant une numérotation avec un espacement de sous-porteuse minimum.

9. Procédé selon la revendication 6, le réglage, par le dispositif terminal, du paramètre DRX comprenant :
le réglage, par le dispositif terminal, du paramètre DRX à un paramètre DRX spécifique, le paramètre DRX spécifique étant préconfiguré par un dispositif de réseau.

10. Procédé selon la revendication 4 ou 8, l'espacement minimal de sous-porteuse étant de 15 kHz.

11. Procédé selon l'une quelconque des revendications 3, 4, 7 à 10, avant le réglage, par le dispositif terminal, du paramètre DRX, le procédé comprenant en outre :
la réception d'informations de configuration envoyées par un dispositif de réseau, les informations de configuration étant utilisées pour indiquer une relation de mise en correspondance ; ou,
l'acquisition, par le dispositif terminal, d'une relation de mise en correspondance pré-mémorisée dans le dispositif terminal.

12. Dispositif terminal, comprenant :
une unité de réglage (510), configurée pour régler un paramètre de réception discontinue, DRX, lorsqu'un paramètre de transmission utilisé pour effectuer une transmission de données est modifié ;
une unité de communication (520), configurée pour surveiller un canal de commande de liaison descendante physique, PDCCH, sur la base du paramètre DRX réglé par l'unité de réglage ; le dispositif terminal étant **caractérisé par** :
le paramètre de transmission comprenant une partie de bande passante de transmission, BWP ; ou une BWP et une numérotation, la numérotation comprenant un espacement de sous-porteuse ; et
le paramètre DRX comprenant un temporisateur de durée d'activation DRX et/ou un décalage d'intervalle DRX.

13. Dispositif terminal selon la revendication 12, le fait que le paramètre de transmission est modifié comprenant le fait que la BWP est modifiée.

14. Dispositif terminal selon la revendication 12, le fait que le paramètre de transmission est modifié comprenant le fait que la BWP et la numérotation sont modifiées.
